# EUROPEAN PATENT APPLICATION

(11) **EP 2 315 060 A2**
(43) Date of publication of application: **27.04.2011**
(21) Application number: 10013704.1
(22) Date of filing: 15.10.2010
(51) Int. Cl.: G02B 6/00, F21V 8/00

(54) **Light source module and light source apparatus**

(30) Priority: 20.10.2009 TW 98135463
(71) Applicant: Young Lighting Technology Corporation, Hsin-Chu 300 (TW)
(72) Inventor: Chang, Chia-Hao, Hsin-Chu 300 Taiwan (CN); Hwang, Jung-Min, Hsin-Chu 300 Taiwan (CN)
(74) Representative: TER MEER - STEINMEISTER & PARTNER GbR

(57) **Abstract**

A light source module includes an LGP, a light distribution control element, and at least a light-emitting device. The LGP includes a first curved portion, a second curved portion, a first curved surface, a second curved surface, and a light incident surface. The second curved portion connects the first curved portion. A curving direction of the first curved portion and a curving direction of the second curved portion are substantially opposite to each other. The first curved surface is located on the first curved portion and the second curved portion. The second curved surface is opposite to the first curved surface. The light incident surface connects the first curved surface and the second curved surface. The light distribution control element is disposed at a side of the first curved surface. The light-emitting device is disposed beside the light incident surface. A light source apparatus is also provided.

## Description

### 1. Field of the Invention

The invention generally relates to a light source, and more particularly, to a light source module adopting a curved light guide plate (LGP) and a light source apparatus using the above-mentioned light source module.

### 2. Description of Related Art

Along with the progress of the illumination technique, the light source adopted by a lighting apparatus has been evolved from the traditional incandescent bulb, the fluorescent lamp until the light emitting diode (LED) rapidly developed in recent years. The LED has many advantages, such as power-saving, long lifetime, environment-friendly, fast starting, small size and so on, and the power achieved by the LED gets larger and larger accompanied by the technical mature thereof, so that the LED nowadays seems to be able to gradually substitute the fluorescent lamp in the general illumination field.

The LED is a point light source and the light emitted from the LED is quite concentrated to easily make the naked eyes sense glare so that a side-lighting LED light source module adopting a planar light guide plate (LGP) was developed. In a side-lighting LED light source module, the LEDs are disposed at a side of the planar LGP, while the light emitted from the LEDs is guided by the planar LGP to the front face of the planar LGP to produce a uniform surface light source. However, the diverging angle of the light emitted from the front face of the planar LGP is not large so that the illumination at the peripheral area surrounding the right down position of the planar LGP is not sufficient, although the illumination provided by a side-lighting LED light source module adopting a planar LGP at the right down position may be sufficient. In addition, the light-radiation pattern and the light intensity distribution provided by the light source module adopting a planar LGP is hard to be modified to suit different demands and environments.

Moreover, a lighting apparatus having a diffuser in the light transmission path of the LEDs is often too thick and looks like a bulky one.

Taiwan Patent No. M315871 discloses an arc-shaped backlight module, and the arc-shaped backlight module includes an edge rod, an arc-shaped LGP, and a reflection sheet, wherein a plurality of arc-shaped backlight modules may be connected in series together by a plurality of edge rods. Besides, Taiwan Patent No. M282110 also discloses a light-guiding illumination device, and the light-guiding illumination device includes a light source, a light guide body with a reflection film, and a reflection plate. The light guide body has a certain geometry shape and is used to transmit the light, while the reflection film and the reflection plate are used to reflect the light.

### SUMMARY OF THE INVENTION

Accordingly, the invention is directed to a light source module having a smaller thickness and able to control the bright-dark effect and luminance uniformity of the light-emitting surface thereof.

The invention is also directed to a light source apparatus able to form different shapes by connecting in series a plurality of the above-mentioned light source modules.

Other advantages of the invention may be further indicated by the disclosures of the invention.

To achieve at least one of the above-mentioned advantages, or to achieve other advantages, an embodiment of the invention provides a light source module including a light guide plate (LGP), a light distribution control element, and at least a light-emitting device. The LGP includes a first curved portion, a second curved portion, a first curved surface, a second curved surface, and a light incident surface. The second curved portion connects the first curved portion, wherein a curving direction of the first curved portion and a curving direction of the second curved portion are substantially opposite to each other. The first curved surface is located on the first curved portion and the second curved portion. The second curved surface is opposite to the first curved surface and located on the first curved portion and the second curved portion. The light incident surface connects the first curved surface and the second curved surface. The light distribution control element is disposed at a side of the first curved surface. The light-emitting device is disposed beside the light incident surface and capable of emitting a light beam, wherein the light beam is capable of entering the LGP via the light incident surface and being transmitted to the light distribution control element via the first curved surface.

Another embodiment of the invention provides a light source apparatus including the above-mentioned light source module, another light source module, and a connector. The another light source module includes an LGP, a light distribution control element, and at least a light-emitting device. The LGP includes a third curved surface, a fourth curved surface, and a light incident surface. The fourth curved surface is opposite to the third curved surface. The light incident surface connects the third curved surface and the fourth curved surface. The light distribution control element is disposed at a side of the third curved surface. The light-emitting device is disposed beside the light incident surface of the another light source module and capable of emitting a light beam. The light beam is capable of entering the LGP via the light incident surface of the another light source module and being transmitted to the light distribution control element of the another light source module via the third curved surface. The connector has a first accommodating recess and a second accommodating recess. A portion of the LGP of the above-mentioned light source module and a portion of the LGP of the another light source module are respectively disposed in the first accommodating recess and the second accommodating recess, and the light-emitting device of the above-mentioned light source module and the light-emitting device of the another light source module are respectively disposed in the first accommodating recess and the second accommodating recess.

Based on the described above, since the light source module provided by the embodiment of the invention adopts an LGP for guiding the light and the light-emitting device is disposed at the side of the LGP, the light source module of the embodiment of the invention has a smaller thickness. Besides, the light distribution control element of the embodiment of the invention is disposed at a side of the first curved surface so that the bright-dark effect and luminance uniformity of the light-emitting surface may be controlled well. Further, in the light source module of the embodiment of the invention, the curving direction of the first curved portion and the curving direction of the second curved portion are substantially opposite to each other so that the light-radiation pattern provided by the light source module may be easily modified. Moreover, the light source apparatus of the embodiment of the invention employs a connector to connect a plurality of light source modules; as a result, the user may use different combinations of the light source modules in different ways to make the light source apparatus have different shapes.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

Fig. 1A is a 3-dimensional diagram of a light source module according to an embodiment of the invention.

Fig. 1B is a sectional diagram along line I-I of the light source module of Fig. 1A.

Fig. 1C is a sectional diagram along line II-II of the light source module of Fig. 1A.

Fig. 2A is a sectional diagram of a light source module according to another embodiment of the invention.

Fig. 2B is a sectional diagram of a light source module according to yet another embodiment of the invention.

Fig. 2C is a sectional diagram of a light source module according to yet another embodiment of the invention.

Fig. 2D is a sectional diagram of a light source module according to yet another embodiment of the invention.

Fig. 2E is a sectional diagram of a light source module according to yet another embodiment of the invention.

Fig. 2F is a sectional diagram of a light source module according to yet another embodiment of the invention.

Fig. 2G is a sectional diagram of a light source module according to yet another embodiment of the invention.

Fig. 3 is a sectional diagram of a light source module according to yet another embodiment of the invention.

Fig. 4 is a sectional diagram of a light source module according to yet another embodiment of the invention.

Fig. 5 is a sectional diagram of a light source apparatus according to an embodiment of the invention.

Fig. 6 is a structure diagram of a light source apparatus according to another embodiment of the invention.

Figs. 7A-7C are three diagrams respectively showing the curved portions of three LGPs with different curving extents and screens.

Figs. 8A-8C are charts of the isolux lines shown on the screens of Figs. 7A-7C.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

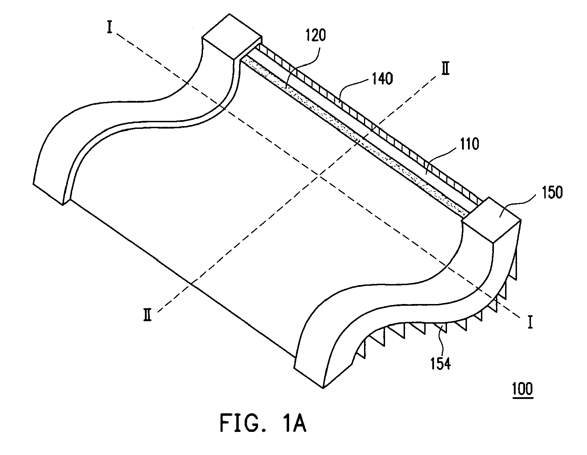

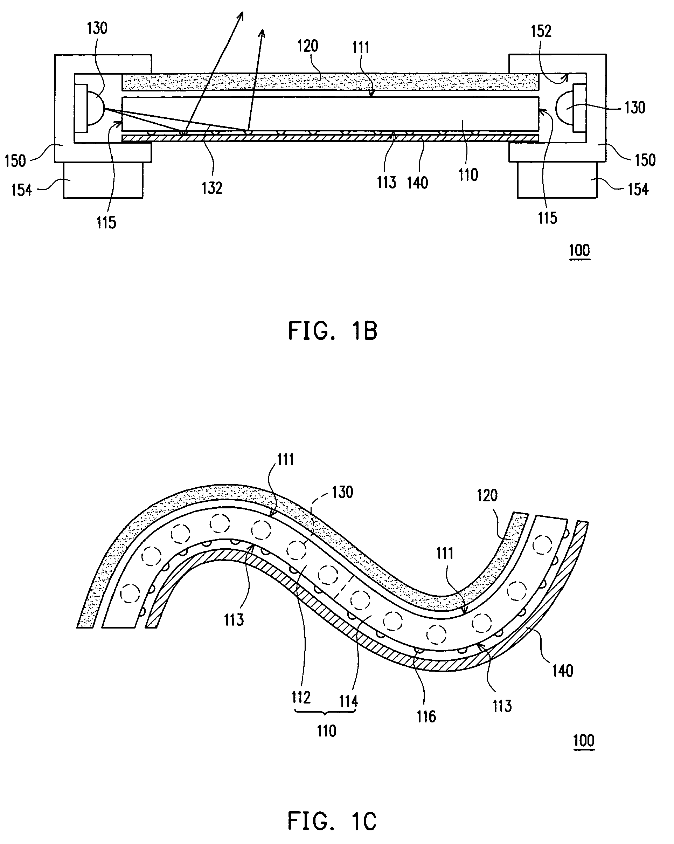

Referring to Figs. 1A-1C, the light source module 100 of the embodiment includes an LGP 110, a light distribution control element 120, and at least a light-emitting device 130. In Fig. 1C, a plurality of light-emitting devices 130 are exemplarily shown, and the broken line in Fig. 1C represents the light-emitting devices 130 located at the back side (facing the page) of the LGP 110 in Fig. 1C.

The LGP 110 includes a first curved portion 112, a second curved portion 114, a first curved surface 111, a second curved surface 113, and at least a light incident surface 115. In Fig. 1B, two light incident surfaces 115 opposite to each other are exemplarily shown. The second curved portion 114 connects the first curved portion 112, wherein a curving direction of the first curved portion 112 and a curving direction of the second curved portion 114 are substantially opposite to each other. In other words, the LGP 110 in the embodiment is an S-shaped LGP. The first curved surface 111 is located on the first curved portion 112 and the second curved portion 114. The second curved surface 113 is opposite to the first curved surface 111 and located on the first curved portion 112 and the second curved portion 114. The light incident surface 115 connects the first curved surface 111 and the second curved surface 113. The light distribution control element 120 is disposed at a side of the first curved surface 111. The light-emitting devices 130 are disposed beside the light incident surface 115 and capable of emitting a light beam 132. In the embodiment, the light-emitting devices 130 are at a side of the light incident surface 115 and arranged into an S shape following the LGP 110. In addition, the light-emitting devices 130 in the embodiment are, for example, LEDs. However in other embodiments, the light-emitting devices 130 may be a fluorescent lamp or other appropriate light-emitting devices. The light beam 132 enters the LGP 110 via the light incident surface 115 and is transmitted to the light distribution control element 120 via the first curved surface 111. In more details, after the light beam 132 enters the LGP 110 via the light incident surface 115, the light beam 132 may get total internal reflection (TIR) many times at the first curved surface 111 and the second curved surface 113, while on the second curved surface 113 of the LGP 110, a plurality of micro-structures 116 are disposed so as to break the TIR. A reflection component 140 is disposed at a side of the second curved surface 113, a part of the light beam 132 is refracted by the micro-structures 116 and then strikes the reflection component 140. The reflection component 140 then reflects the light beam 132 so that the light beam 132 sequentially penetrates the second curved surface 113 and the first curved surface 111 and then arrives at the light distribution control element 120. Besides, another light beam 132 is reflected by the micro-structures 116 so as to strike the first curved surface 111 and then is transmitted to the light distribution control element 120 via the first curved surface 111. In the embodiment, the micro-structures 116 are, for example, convex spots; but in other embodiments, the micro-structures may be diffusing material, concave spots, convex patterns or concave patterns. In the embodiment, the reflection component 140 is, for example, a reflection sheet.

In the embodiment, the light distribution control element 120 is, for example, a diffusion sheet, wherein the diffusion sheet may be the diffusion sheet with diffusion grains therein or the diffusion sheet with diffusion micro-structures thereon. In other embodiments however, the light distribution control element 120 may be at least one of a diffusion sheet, a light-converging sheet, a light-diverging sheet, and a combination sheet of light-converging and light-diverging. After the light beam 132 penetrates the light distribution control element 120, a curved surface light source with more uniform luminance is formed.

In the embodiment, the light source module 100 further includes at least a lamp cover 150, and in Figs. 1A and 1B, two lamp covers 150 are exemplarily shown. The lamp cover 150 has an accommodating recess 152, wherein a portion of the LGP 110 is disposed in the accommodating recess 152 and the light-emitting devices 130 are also disposed in the accommodating recess 152. A plurality of dissipation fins 154 are disposed on the lamp cover 150 to enhance the heat dissipation capability. In the embodiment, the dissipation fins 154 are disposed at a side close to the reflection component 140 (as shown in Figs. 1A and 1B). In other embodiments, the dissipation fins 154 may be disposed at a side close to the light distribution control element 120.

Since the light source module 100 of the embodiment adopts the LGP 110 for guiding light and the light-emitting devices 130 are disposed at the side edge of the LGP 110, the light source module 100 of the embodiment is thinner. In addition, since the light distribution control element 120 is disposed at a side of the first curved surface 111, the bright-dark effect and luminance uniformity of the light-emitting surface may be controlled well. Further, since the first curved portion 112 and the second curved portion 114 respectively have a curving direction opposite to each other in the light source module 100 of the embodiment, the light-radiation pattern provided by the light source module 100 may be easily changed. Moreover, the light beam 132 emitted from the light-emitting devices 130 is finally emitted to the external environment after arriving the LGP 110 and the light distribution control element 120, so that the naked eyes of the user are exempted from directly watching the light-emitting devices 130 and accordingly from sensing glare.

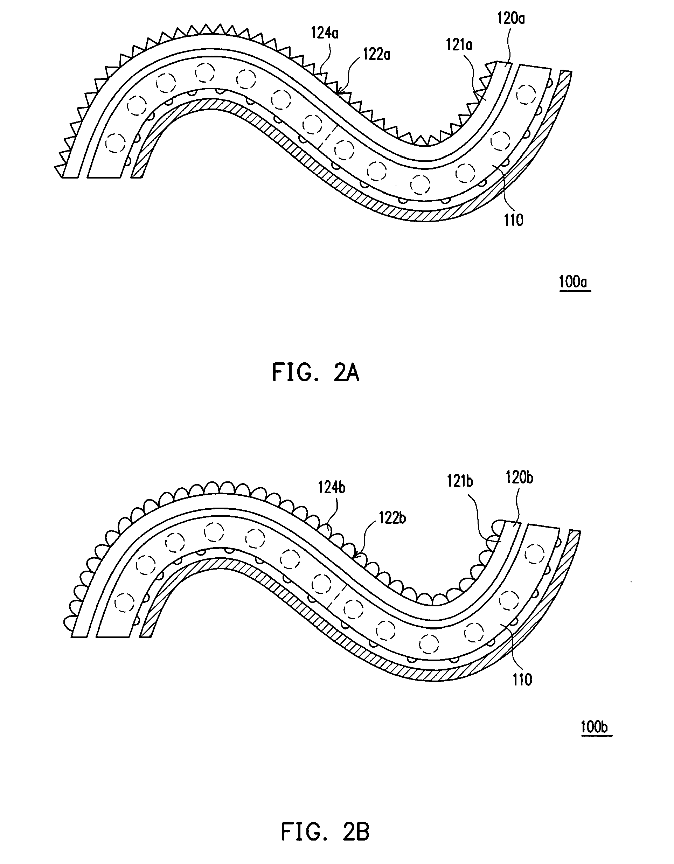

Referring to Fig. 2A, the light source module 100a of the embodiment is similar to the light source module 100 of Fig. 1C except that in the light source module 100a of the embodiment, the light distribution control element 120a is a light-converging sheet. In the embodiment, a plurality of prism structures 124a is disposed on the surface 122a of the light distribution control element 120a away from the LGP 110. The prism structures 124a may be rod-shaped prism or pyramid-shaped prism. In more details, the light distribution control element 120a may include a substrate 121a and the prism structures 124a disposed on the surface of the substrate 121a. In other embodiments however, the substrate 121a may be replaced by a diffusion sheet so that the prism structures 124a are disposed on the surface of the diffusion sheet away from the LGP 110. The prism structures 124a are helpful to make the emitting light have a smaller diverging angle.

Referring to Fig. 2B, the light source module 100b of the embodiment is similar to the light source module 100a of Fig. 2A and the light distribution control element 120b is also a light-converging sheet. The difference of the light distribution control element 120b from the light distribution control element 120a rests in that a plurality of convex lens structures 124b are disposed on the surface 122b of the light distribution control element 120b away from the LGP 110. The convex lens structure 124b herein is, for example, a lenticular lens with a convex surface curved in one dimension only or a convex lens curved in radial directions. In other embodiments, the substrate 121b of the light distribution control element 120b may be replaced by a diffusion sheet so that a plurality of convex lens structures 124b are disposed on the surface of the diffusion sheet away from the LGP 110. The convex lens structures 124b herein are helpful to make the emitting light have a smaller diverging angle.

The invention does not restrict the structure on the surface of the light-converging sheet is one of the prism structures 124a and the convex lens structures 124b. In fact, in other embodiments, both a plurality of prism structures 124a and a plurality of convex lens structures 124b may be allowed to be disposed on the surface of the light-converging sheet away from the LGP 110; or in other embodiments, both a plurality of prism structures 124a and a plurality of convex lens structures 124b may be allowed to be disposed on the surface of the diffusion sheet away from the LGP 110.

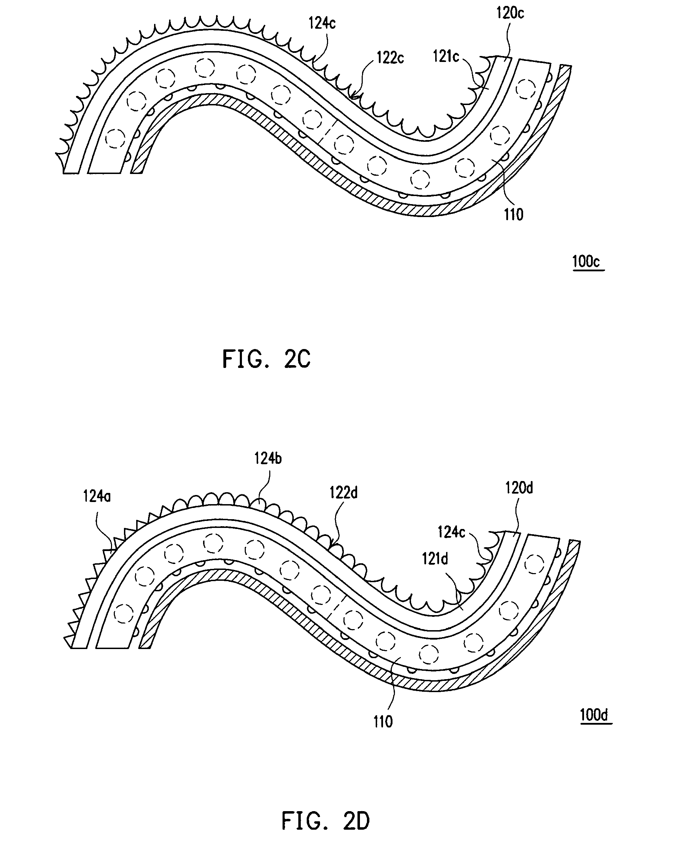

Referring to Fig. 2C, the light source module 100c of the embodiment is similar to the light source module 100b of Fig. 2B except that the light distribution control element 120c in the light source module 100c of the embodiment is a light-diverging sheet. In the embodiment, a plurality of concave lens structures 124c is disposed on the surface 122c of the light distribution control element 120c away from the LGP 110. The concave lens structure 124c herein is, for example, a rod-shaped concave lens with a concave surface curved in one dimension only or a concave lens curved in radial directions. In the embodiment, the substrate 121c of the light distribution control element 120c may be replaced by a diffusion sheet, and a plurality of concave lens structures 124c is disposed on the surface of the diffusion sheet away from the LGP 110. The concave lens structures 124c herein are helpful to make the emitting light have a larger diverging angle.

Referring to Fig. 2D, the light source module 100d of the embodiment is similar to the light source modules 100a, 100b, and 100c of Figs. 2A-2C except that the light distribution control element 120d in the light source module 100d of the embodiment is a combination sheet of light-converging and light-diverging. In more details, a plurality of prism structures 124a, a plurality of convex lens structures 124b, and a plurality of concave lens structures 124c are all disposed on the surface 122d of the light distribution control element 120d away from the LGP 110. In other embodiments however, any combination of the prism structures 124a, the convex lens structures 124b, and the concave lens structures 124c is disposed on the surface 122d of the light distribution control element 120d away from the LGP 110. Different combinations make the light-radiation pattern and the light intensity distribution of the emitting light easily changed.

In other embodiments, the substrate 121d of the light distribution control element 120d may be replaced by a diffusion sheet so that an appropriate combination of a plurality of prism structures 124a, a plurality of convex lens structures 124b, and a plurality of concave lens structures 124c is disposed on the surface of the diffusion sheet away from the LGP 110.

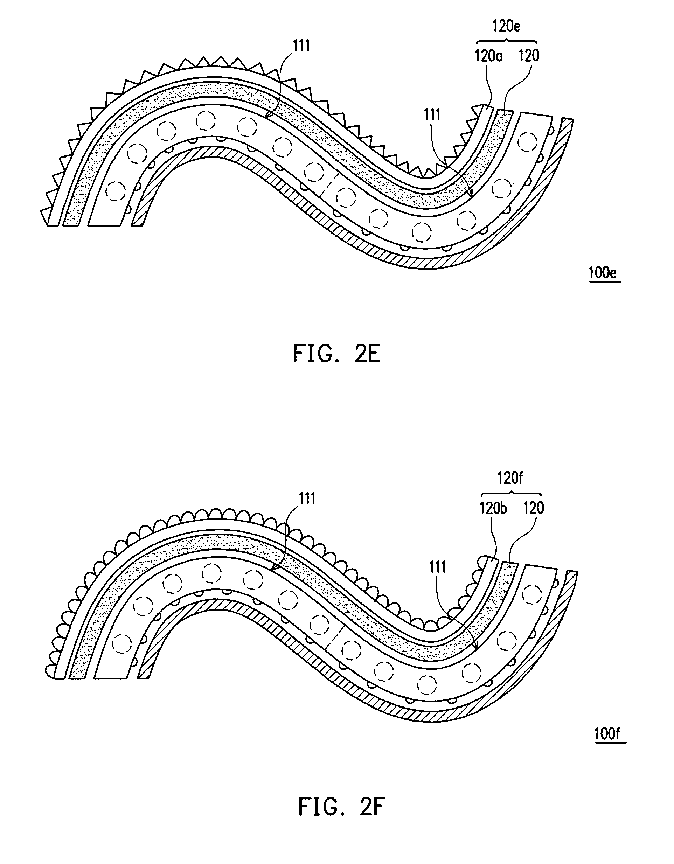

Referring to Fig. 2E, the light source module 100e of the embodiment is similar to the light source modules 100 of Fig. 1C and the light source modules 100a of Fig. 2A except that the light distribution control element 120e in the light source module 100e of the embodiment includes the light distribution control element 120 of Fig. 1C (diffusion sheet) and the light distribution control element 120a of Fig. 2A (light-converging sheet), wherein the light distribution control element 120 (diffusion sheet) is disposed between the first curved surface 111 and the light distribution control element 120a. The embodiment employs two independent film sheets: diffusion sheet and light-converging sheet. In particular, the two film sheets are commercially available on the market without special order, so the cost is reduced.

Referring to Fig. 2F, the light source module 100f of the embodiment is similar to the light source modules 100 of Fig. 1C and the light source modules 100b of Fig. 2B except that the light distribution control element 120f in the light source module 100f of the embodiment includes the light distribution control element 120 of Fig. 1C (diffusion sheet) and the light distribution control element 120b of Fig. 2B (light-converging sheet), wherein the light distribution control element 120 (diffusion sheet) is disposed between the first curved surface 111 and the light distribution control element 120b.

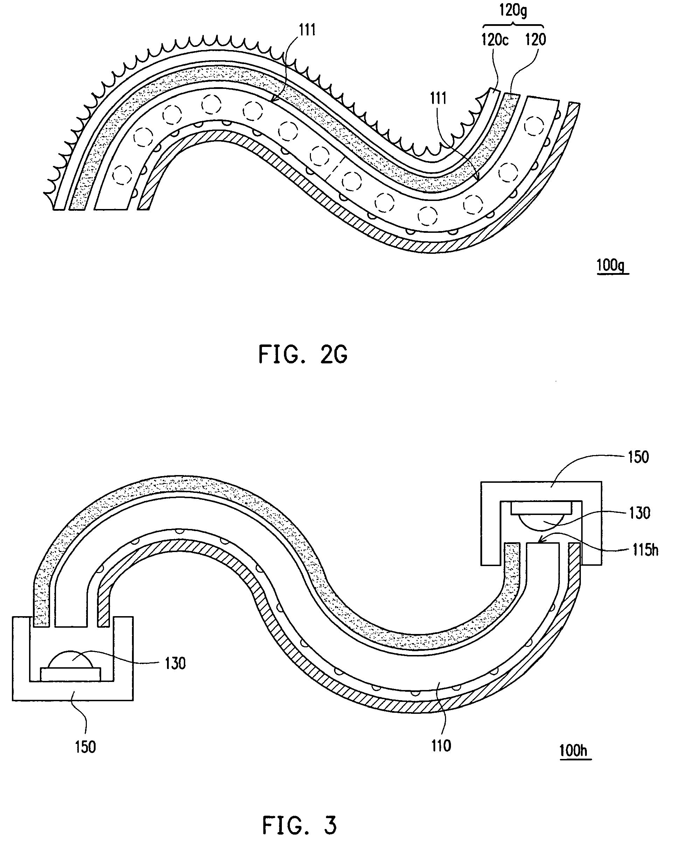

Referring to Fig. 2G, the light source module 100g of the embodiment is similar to the light source modules 100 of Fig. 1C and the light source modules 100c of Fig. 2C except that the light distribution control element 120g in the light source module 100g of the embodiment includes the light distribution control element 120 of Fig. 1C (diffusion sheet) and the light distribution control element 120c of Fig. 2C (light-diverging sheet), wherein the light distribution control element 120 (diffusion sheet) is disposed between the first curved surface 111 and the light distribution control element 120c. The light distribution control element 120c of the embodiment (light-diverging sheet) may be also replaced by the light distribution control element 120d of Fig. 2D (combination sheet of light-converging and light-diverging). In other words, with the configuration, the diffusion sheet is disposed between the first curved surface 111 and the combination sheet of light-converging and light-diverging.

Referring to Fig. 3, the light source module 100h of the embodiment is similar to the light source modules 100 of Figs. 1A and 1B except that the light-emitting devices 130 and the lamp cover 150 in Figs. 1A and 1B are disposed beside the S-shaped light incident surface 115 of the LGP 110, while the light-emitting devices 130 and the lamp cover 150 of the light source module 100h of the embodiment are disposed on the long-bar-shaped side surface (i.e., the light incident surface 115h) of the LGP 110, wherein the long-bar-shaped side surface is corresponding to the side surface of the LGP 110 in Fig. 1A (at the upper-right position in Fig. 1A).

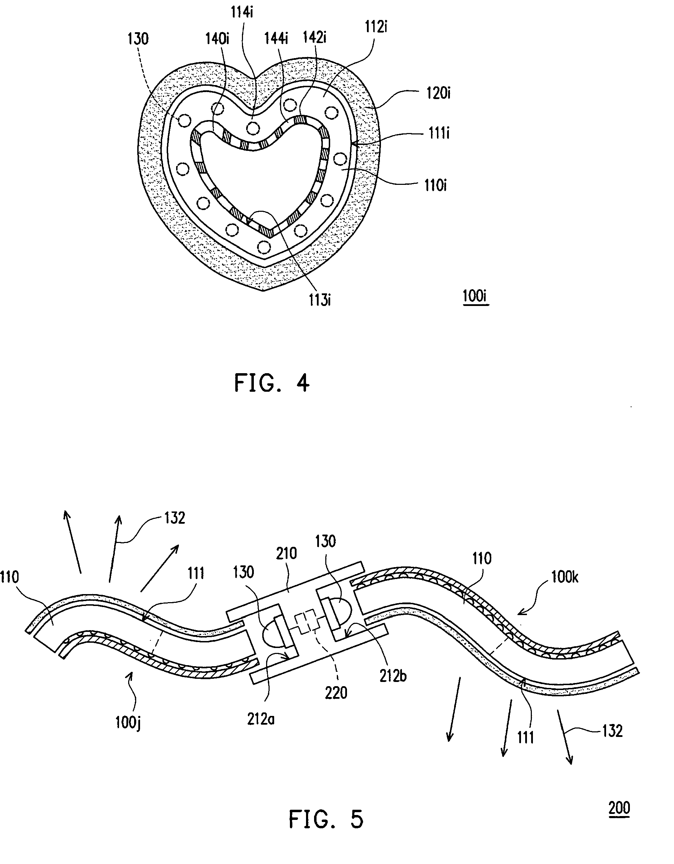

Referring to Fig. 4, the light source module 100i of the embodiment is similar to the light source modules 100 of Fig. 1C except that the LGP 110i in the embodiment is designed to be a closed circle, and the light distribution control element 120i is also a closed circle following the LGP 110i and disposed on the first curved surface 111 i of the LGP 110i. In the embodiment, the curving direction of the first curved portion 112i and the curving direction of the second curved portion 114i are substantially opposite to each other. In addition, the reflection component 140i disposed on the second curved surface 113i may include a patterned silver-paint layer 142i and a patterned white-paint layer 144i, wherein the patterned silver-paint layer 142i somehow functions to mirror reflection and the patterned white-paint layer 144i somehow functions to diffusion reflection.

Referring to Fig. 5, the light source apparatus 200 of the embodiment includes two light source modules 100j and 100k, wherein the light source modules 100j and 100k have the same structure as the structure of the light source module 100h in Fig. 3 without the lamp cover 150 at a side thereof and the light-emitting devices 130 at the same side thereof. In addition, the light source apparatus 200 includes a connector 210 having two accommodating recesses 212a and 212b. A portion of the LGP 110 of the light source module 100j and a portion of the LGP 110 of the light source module 100k are respectively disposed in the accommodating recesses 212a and 212b. The light-emitting devices 130 of the light source module 100j and the light-emitting devices 130 of the light source module 100k are respectively disposed in the accommodating recesses 212a and 212b.

In the embodiment, the light source apparatus 200 further includes a driving unit 220 disposed on the connector 210 or in the connector 210, wherein the driving unit 220 is electrically connected to the light-emitting devices 130 of the light source module 100j and the light-emitting devices 130 of the light source module 100k so as to drive the light-emitting devices 130 for emitting light. Besides, in the embodiment, the first curved surface 111 of the light source module 100j faces up, while the first curved surface 111 of the light source module 100k faces down. The light emitted from the upward first curved surface 111 is used for illuminating ceiling or wall to form indirect illumination, while the light emitted from the downward first curved surface 111 is used for illuminating the user to form direct illumination. In other words, the light source apparatus 200 may also used for semi-direct illumination, but the invention is not limited here. In other embodiments, both the first curved surface 111 of the light source module 100j and the first curved surface 111 of the light source module 100k may face up or down so as to form indirect illumination or direct illumination.

The invention does not limit the connector 210 for connecting the light source module 100h of Fig. 3. In other embodiments, the connector 210 is also used for connecting the light source modules of other embodiments or connecting light source modules of two different embodiments.

The invention further does not limit the connector 210 for connecting two light source modules. In fact, in other embodiments, the connector may connect three or over three light source modules. The invention does not limit the light source apparatus to have only one connector too. In other embodiments, a light source apparatus may have two or over two connectors, to connect a plurality of light source modules to form different shapes. In following, one of the connections is depicted by an embodiment.

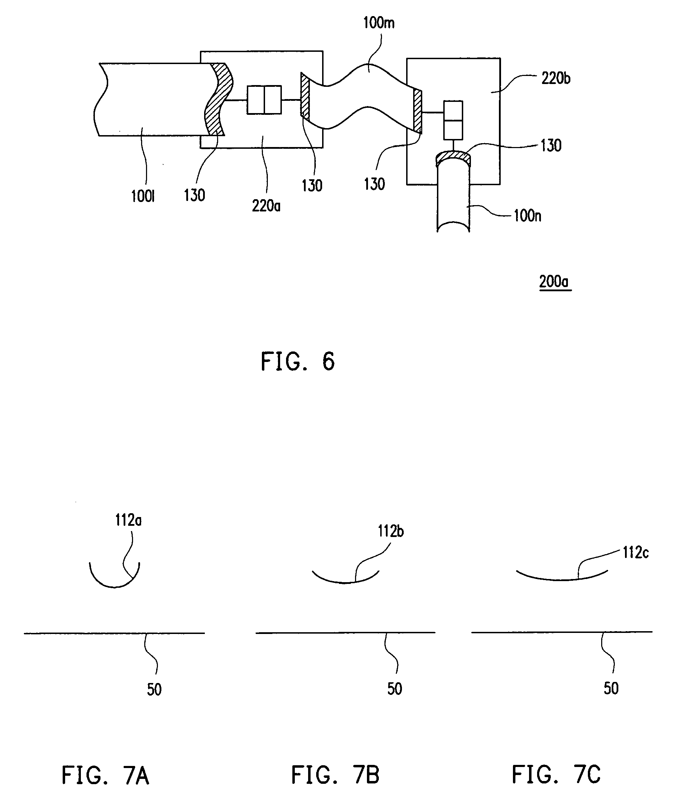

Referring to Fig. 6, the light source apparatus 200a of the embodiment is similar to the light source apparatus 200 in Fig.5 except that the light source apparatus 200a of the embodiment includes three light source modules 1001, 100m, and 100n and two connectors 220a and 220b, wherein the structure of the light source module 1001 is the same as the structure of the light source module 100 of Fig. 1A without the lamp cover 150 at a side thereof and the light-emitting devices 130 at the same side thereof; the structure of the light source module 100m is the same as the structure of the light source module 100h of Fig. 3 without the lamp cover 150. In addition, for simplicity, the light-emitting devices 130 in Fig. 6 is represented by block with hatching lines. The connector 220a connects the light source modules 1001 and 100m and the connector 220b connects the light source modules 100m and 100n. In the embodiment, both the light source modules 1001 and 100m have an S-shaped LGP; however, the invention does not define the connector 220b only connects the light source modules having the S-shaped LGP. In fact, in other embodiments, the connector may be used to connect LGPs with other shapes; for example, the light source module 100n has an LGP curved in single direction, i.e., a C-shaped LGP.

Since the light source apparatus 200a of the embodiment uses the connectors 220a and 220b to connect a plurality of light source modules 1001, 100m, and 100n, so that the user may combine a plurality of light source modules 1001, 100m, and 100n or other light source modules in different ways to form the light source apparatus 200a with different shapes.

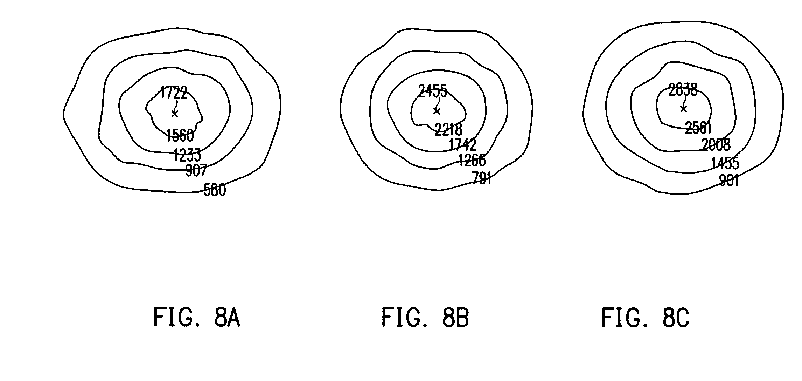

Please refer to Fig. 1A, the curving extent of the LGP 110 itself may affect the illumination of the irradiated object and the light-radiation pattern. Referring to Figs. 7A-7C, the curved portions 112a, 112b, and 112c are for example, the first curved portion 112 of Fig. 1C and have curvature radiuses 15cm, 30cm, and 60cm, respectively. The curved portions 112a, 112b, and 112c have the same arc length 47.1cm and the same width 30cm, and the distances from the curved portions 112a, 112b, and 112c to the screen at the lower position are 30cm. From Figs. 8A-8C, the less the curvature radiuses of the curved portions 112a, 112b, and 112c, the more dispersed the illumination distribution on the screen 50 is and the less the illumination at the center point is. For example, illumination distribution of Fig. 8A is more dispersed than the illumination distribution of Fig. 8C. The long axis of the quasi-ellipse isolux line with the illumination 580 lux in Fig. 8A is longer than the long axis of the quasi-ellipse isolux line with the illumination 901 lux in Fig. 8C; i.e., the light-radiation pattern of Fig. 8A is flatter than the light-radiation pattern of Fig. 8C. In other words, the light source module 100 of Fig. 1A or the light source modules of other embodiments may have different light-radiation patterns and different light intensity distributions by changing the curvatures of the first curved portion 112 and the second curved portion 114.

In summary, the embodiment or embodiments of the invention may have at least one of the following advantages: since the light source module provided by the embodiment of the invention adopts an LGP for guiding the light and the light-emitting device is disposed at the side of the LGP, the light source module of the embodiment of the invention has a smaller thickness. Besides, the light distribution control element is disposed at a side of the first curved surface so that the bright-dark effect and luminance uniformity of the light-emitting surface may be controlled well. Further, in the light source module of the embodiment of the invention, the curving direction of the first curved portion and the curving direction of the second curved portion are substantially opposite to each other so that the light-radiation pattern provided by the light source module may be easily modified. Moreover, the light source apparatus of the embodiment of the invention employs a connector to connect a plurality of light source modules; as a result, the user may use different combinations of the light source modules in different ways to make the light source apparatus have different shapes.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defmed by the following claims. Moreover, no element and component in the present disclosure is intended to be dedicated to the public regardless of whether the element or component is explicitly recited in the following claims.

## Claims

1. A light source module, comprising:
a light guide plate, comprising:
a first curved portion;
a second curved portion, connecting the first curved portion, wherein a curving direction of the first curved portion and a curving direction of the second curved portion are substantially opposite to each other;
a first curved surface, located on the first curved portion and the second curved portion;
a second curved surface, opposite to the first curved surface and located on the first curved portion and the second curved portion; and
a light incident surface, connecting the first curved surface and the second curved surface;
a light distribution control element, disposed at a side of the first curved surface;
and
at least a light-emitting device, disposed beside the light incident surface and capable of emitting a light beam, wherein the light beam is capable of entering the light guide plate via the light incident surface and being transmitted to the light distribution control element via the first curved surface.

2. The light source module as claimed in claim 1, further comprising a reflection component disposed at a side of the second curved surface.

3. The light source module as claimed in claim 1, wherein the light distribution control element comprises at least one of a diffusion sheet, a light-converging sheet, a light-diverging sheet, and a combination sheet of light-converging and light-diverging.

4. The light source module as claimed in claim 3, wherein the light distribution control element comprises the diffusion sheet and the light-converging sheet, and the diffusion sheet is disposed between the first curved surface and the light-converging sheet.

5. The light source module as claimed in claim 3, wherein the light distribution control element comprises the diffusion sheet and the light-diverging sheet, and the diffusion sheet is disposed between the first curved surface and the light-diverging sheet.

6. The light source module as claimed in claim 3, wherein the light distribution control element comprises the diffusion sheet and the combination sheet of light-converging and light-diverging, and the diffusion sheet is disposed between the first curved surface and the combination sheet of light-converging and light-diverging.

7. The light source module as claimed in claim 3, wherein a plurality of prism structures, a plurality of convex lens structures or a plurality of prism structures plus a plurality of convex lens structures are disposed on a surface of the light-converging sheet away from the light guide plate.

8. The light source module as claimed in claim 3, wherein a plurality of concave lens structures are disposed on a surface of the light-diverging sheet away from the light guide plate.

9. The light source module as claimed in claim 1, wherein the light distribution control element comprises a diffusion sheet, and a plurality of prism structures, a plurality of convex lens structures, a plurality of concave lens structures or a combination of a plurality of prism structures, a plurality of convex lens structures and a plurality of concave lens structures are disposed on a surface of the diffusion sheet away from the light guide plate.

10. The light source module as claimed in claim 1, further comprising a lamp cover having an accommodating recess, wherein a portion of the light guide plate is disposed in the accommodating recess and the light-emitting device is disposed in the accommodating recess.

11. A light source apparatus, comprising:
the light source module as claimed in claim 1;
another light source module, comprising:
a light guide plate, comprising:
a third curved surface;
a fourth curved surface, opposite to the third curved surface; and
a light incident surface, connecting the third curved surface and the fourth curved surface;
a light distribution control element, disposed at a side of the third curved surface; and
at least a light-emitting device, disposed beside the light incident surface of the another light source module and capable of emitting a light beam, wherein the light beam is capable of entering the light guide plate via the light incident surface of the another light source module and being transmitted to the light distribution control element of the another light source module via the third curved surface; and
a connector, having a first accommodating recess and a second accommodating recess, wherein a portion of the light guide plate of the light source module and a portion of the light guide plate of the another light source module are respectively disposed in the first accommodating recess and the second accommodating recess, and the light-emitting device of the light source module and the light-emitting device of the another light source module are respectively disposed in the first accommodating recess and the second accommodating recess.

12. The light source apparatus as claimed in claim 11, wherein the light guide plate of the another light source module further comprises:
a third curved portion; and
a fourth curved portion connecting the third curved portion, wherein a curving direction of the third curved portion and a curving direction of the fourth curved portion are substantially opposite to each other, the third curved surface is located on the third curved portion and the fourth curved portion, and the fourth curved surface is located on the third curved portion and the fourth curved portion.

13. The light source apparatus as claimed in claim 11, further comprising a driving unit disposed on or in the connector, wherein the driving unit is electrically connected to the light-emitting device of the light source module and the light-emitting device of the another light source module.

14. The light source apparatus as claimed in claim 11, wherein each of the light source module and the another light source module comprises a reflection component, the reflection component of the light source module is disposed at a side of the second curved surface and the reflection component of the another light source module is disposed at a side of the fourth curved surface.

15. The light source apparatus as claimed in claim 11, wherein each of the light distribution control element of the light source module and the light distribution control element of the another light source module comprises at least one of a diffusion sheet, a light-converging sheet, a light-diverging sheet and a combination sheet of light-converging and light-diverging.

16. The light source apparatus as claimed in claim 15, wherein at least one of the light distribution control element of the light source module and the light distribution control element of the another light source module comprises the diffusion sheet and the light-converging sheet, and the diffusion sheet is disposed between the first curved surface and the light-converging sheet or between the third curved surface and the light-converging sheet.

17. The light source apparatus as claimed in claim 15, wherein at least one of the light distribution control element of the light source module and the light distribution control element of the another light source module comprises the diffusion sheet and the light-diverging sheet, and the diffusion sheet is disposed between the first curved surface and the light-diverging sheet or between the third curved surface and the light-diverging sheet.

18. The light source apparatus as claimed in claim 15, wherein a plurality of prism structures, a plurality of convex lens structures or a plurality of prism structures plus a plurality of convex lens structures are disposed on a surface of the light-converging sheet away from the light guide plate.

19. The light source apparatus as claimed in claim 15, wherein a plurality of concave lens structures are disposed on a surface of the light-diverging sheet away from the light guide plate.

20. The light source apparatus as claimed in claim 11, wherein at least one of the light distribution control element of the light source module and the light distribution control element of the another light source module comprises a diffusion sheet, and a plurality of prism structures, a plurality of convex lens structures, a plurality of concave lens structures or a combination of a plurality of prism structures, a plurality of convex lens structures and a plurality of concave lens structures are disposed on a surface of the diffusion sheet away from the light guide plate.
